# EUROPÄISCHE PATENTSCHRIFT

(11) **EP 0 637 699 B1**
(45) Veröffentlichungstag und Bekanntmachung des Hinweises auf die Patenterteilung: **08.10.1997**
(21) Anmeldenummer: 94111481.1
(22) Anmeldetag: 22.07.1994
(51) Int. Cl.: F16F 1/36

(54) **Federkörper**
Elastic block
Bloc élastique

(30) Priorität: 02.08.1993 DE 4325913
(43) Veröffentlichungstag der Anmeldung: 08.02.1995
(73) Patentinhaber: Clouth Gummiwerke AG, D-50733 Köln (DE)
(72) Erfinder: Zimmermann, Dirk, D-84539 Ampfing (DE)
(74) Vertreter: Freischem, Werner, Dipl.-Ing.

(56) Entgegenhaltungen:
- EP-A- 0 445 012
- DE-A- 4 209 613
- DE-C- 4 002 357
- FR-A- 590 706

## Beschreibung

Die Erfindung betrifft einen Federkörper aus einem elastischen Werkstoff mit den Merkmalen des Oberbegriffs des Anspruchs 1.

Federkörper dieser Art sind bekannt aus der DE 40 02 357. Diese Federkörper weisen einen sanften Übergang von relativ geringen zu höheren Federsteifigkeiten auf. Da die Federkörper aus einem nahezu inkompressiblen Werkstoff gefertigt sind, wie zum Beispiel Gummi, wird das Volumen der länglichen Hohlräume beim Zusammendrücken des Körpers kontinuierlich verkleinert, wodurch sich der freie Querschnitt in der Ebene der Hohlräume und damit die Steifigkeit der Feder kontinuierlich vergrößert.

Diese Art Federkörper werden zur Lagerung und Federung von Maschinen, Motoren oder ähnlichen technischen Geräten verwendet. Hierbei wird neben der Abfederung der prinzipbedingten Schwingungen dieser Geräte auch eine Isolation gegen Körperschall verlangt. Durch die im Federkörper angeordneten Hohlräume wird der auf den elastischen Werkstoff übertragene Körperschall mehrfach gebrochen, so daß eine Übertragung auf die korrespondierende Seite, zum Beispiel auf den Boden einer Werkzeugmaschinenhalle, nicht möglich ist.

Als nachteilig erweist sich dabei oft die Neigung der Feder zum Knicken, da durch die Hohlräume in der oft zylindrischen Außenkontur des Federkörpers die Feder geschwächt wird. Diese Knickneigung der Federkörper muß durch eine entsprechende Führung verhindert werden, die jedoch oft die körperschallisolierende Wirkung des Federkörpers zunichte macht, indem die Schwingungen der Werkzeugmaschine von der Federführung übertragen werden.

Da die Federn in der Regel außen geführt sind, tritt wegen des radialen Fließens des inkompressiblen Federmaterials bei größeren Federwegen häufig eine ungewollte Federversteifung auf. Eine solche Feder kann weder die Funktion der Abfederung von Maschinenschwingungen noch der Isolation von Körperschall erfüllen.

Ein weiterer Nachteil der bekannten Federn besteht darin, daß diese häufig nur schwierig zu fertigen sind, da die Kanäle verschiedener Ebenen unterschiedliche Orientierungen aufweisen. Zur Fertigung solcher Federn sind zwei Werkzeughälften erforderlich, in die Kegeleinsätze einsteckbar sind, die vor Entformen der Feder aus den Werkzeughälften gezogen werden müssen. Durch diesen zweiten Arbeitsschritt wird die Standzeit der Fertigungsmaschinen für solche Federkörper erhöht, wodurch der Herstellungspreis steigt.

Aufgabe der Erfindung ist es, einen einfach herstellbaren Federkörper zu schaffen, der bei kontinuierlich ansteigender Federkennlinie eine ausreichende Isolation gegen Körperschall und eine ausreichende Sicherheit gegen Knicken gewährt.

Diese Aufgabe wird gemäß der Erfindung durch die Merkmale des kennzeichnenden Teils des Anspruchs 1 gelöst.

Bei Zusammendrücken des Federkörpers wird das nahezu inkompressible elastische Material und im Bereich der Hohlräume auch axial verdrängt. Hierdurch werden die Hohlräume, ausgehend von der Mittellinie des Federkörpers, kontinuierlich verschlossen. Damit diese versteifende Wirkung nicht zu schnell eintritt, sind die Hohlräume so ausgebildet, daß sie sich von innen nach außen verjüngen, in dem von der Öffnung abgewandten Bereich also mehr Freiraum zur Aufnahme von verdrängtem Federmaterial zur Verfügung steht als im öffnungsnahen Bereich. Dies hat zur Folge, daß bei größerer Kompression des Federkörpers die Federkennlinie stark ansteigt. Hierdurch ist die Feder in der Lage, sowohl Schwingungen kleinerer und mittlerer Amplituden als auch Schwingungen großer Amplituden ohne ein Durchschlagen oder Anschlagen abzufedern.

Weitere Merkmale und Vorteile der Erfindung ergeben sich aus den Unteransprüchen und aus der nun folgenden Zeichnungsbeschreibung. Die Zeichnung zeigt in
- Fig. 1: eine schaubildliche Darstellung eines erfindungsgemäßen Federkörpers,
- Fig. 2: einen Querschnitt des Federkörpers aus Fig. 1 durch die Hohlräume einer Ebene,
- Fig. 3: einen Querschnitt durch den Federkörper aus Fig. 1 durch die Hohlräume einer zur Ebene aus Fig. 2 benachbarten Ebene.

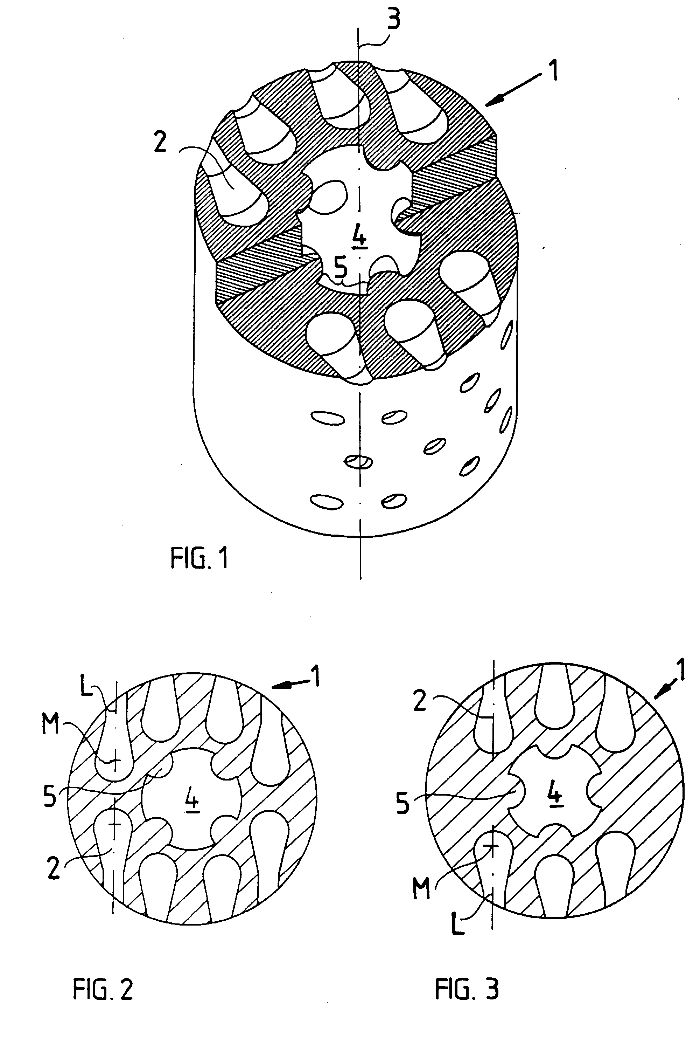

In Fig. 1 ist ein Federkörper 1 dargestellt, der Hohlräume 2 aufweist, die zur Öffnung hin verengend und kegelförmig ausgebildet sind. Die Längsachsen L aller dieser Hohlräume 2 sind zueinander parallel angeordnet. Durch diese Parallelanordnung der Längsachsen L können die Kegeleinsätze zur Fertigung der Hohlräume 2 fest mit den beiden Werkzeughälften verbunden sein. Nach Aushärten des Federkörpers 1 in der Werkzeugform kann er durch einfaches Auseinanderfahren der beiden Werkzeughälften in einem Arbeitsgang entformt werden.

Ein weiterer Vorteil der parallelen Ausrichtung der Hohlräume 2 liegt in der unterschiedlichen Federsteifigkeit für Biegebelastungen, die durch Kraftmomente um oder rechtwinklig zu den Achsen der Hohlräume 2 entstehen. Bei vielen Maschinen gibt es für auftretende Schwingungen eine Vorzugsrichtung. In der dazu rechtwinkligen Richtung dagegen sind die Schwingungen meist gering. Durch den erfindungsgemäßen Federkörper 1 ist es möglich, beide Schwingungen wirkungsvoll abzufedern und den Körperschall der Maschine ohne Versteifungen der Federung gegenüber dem Fundament oder Bett der Maschine zu isolieren. Auch im Fahrzeugbau, zum Beispiel bei der Motorenlagerung, ist diese Eigenschaft sehr nützlich. So kann zum Beispiel ein Motorlager in Fahrtrichtung eine sehr hohe Federsteifigkeit aufweisen, um ein starkes Auslenken des Motors bei Beschleunigung oder Bremsen des Fahrzeugs zu verhindern und quer zur Fahrtrichtung eine geringe Federsteifigkeit aufweisen, um die Massenträgheit des relativ schweren Fahrzeugmotors abzufedern. Um den Körperschall noch wirkungsvoller brechen zu können, sollten die Hohlräume 2 einer Ebene zu den Hohlräumen 2 einer benachbarten Ebene um den halben Abstand A der Längsachsen L der Hohlräume 2 einer Ebene versetzt angeordnet sein. Hierdurch wird der Körperschall, der durch die Stege zwischen zwei Hohlräumen 2 einer Ebene übertragen werden kann, spätestens an dem Hohlraum 2 der benachbarten Ebene gebrochen. An den weiteren Ebenen ergibt sich dann eine diffuse Streuung der Schallwellen, wodurch eine effiziente Isolation erreicht wird.

Um ein Knicken der Feder in Hauptbelastungsrichtung zu verhindern, können die jeweils mittleren Hohlräume 2 einer Ebene kürzer ausgeführt sein als die äußeren Hohlräume 2. Hierdurch ergibt sich eine Versteifung des mittleren Bereichs schon nach geringer Kompression der Feder. Diese Versteifung setzt sich dann bei weiterer Kompression von innen nach außen fort. Ein solcher Federkörper 1 weist bereits bei relativ geringen Belastungen in Hauptbelastungsrichtung eine hohe Steifigkeit auf, kann jedoch Schwingungen quer zur Hauptbelastungsrichtung nach wie vor wirksam abfedern. So können beispielsweise auch beim Anfahren oder Abbremsen eines PKW in Kurven Querschwingungen des Motors abgefedert werden.

Zweckmäßigerweise wird der erfindungsgemäße Federkörper 1 zur Verhinderung von Knicken innen geführt. Hierzu ist der in Fig. 1 dargestellte Federkörper 1 mittig von einem Hohlraum zur Aufnahme einer Führung durchsetzt. Damit der Federkörper 1 nicht bei Kompression gangflächig an der Führung anliegt und so durch Reibung und Materialverdrängung versteift, weist er an der Oberfläche der mittigen Ausnehmung vier nach innen vorspringende, über den Umfang verteilte halbkugelförmige Abstützpunkte auf.

Diese Abstützpunkte verhindern, daß bei Kompression des Federkörpers 1 dieser sich an der Innenführung anlegt, und drücken das verdrängte Material in radialer Richtung nach außen. Hierdurch liegt der Federkörper 1 über einen weiten Bereich der Federkennlinie nur wenig an der Führung an, wodurch die Reibung und die Übertragung des Körperschalls vom Federkörper 1 auf den Führungskörper nahezu verhindert wird.

### Bezugszeichenliste:

- 1: Federkörper
- 2: Hohlraum
- 3: Mittelachse
- 4: Ausnehmung
- 5: Abstützpunkt

- L: Längsachse
- M: Mittelpunkt
- A: Abstand der Hohlräume

## Patentansprüche

1. Federkörper (1) aus einem elastischen Werkstoff, dessen Hauptbelastungsrichtung parallel zu seiner Mittelachse (3) liegt und dessen sämtliche quer zur Mittelachse (3) liegenden Hohlräume (2) länglich sind und in mehreren rechtwinklig zur Mittelachse (3) liegenden Ebenen angeordnet sind, **dadurch gekennzeichnet**, daß diese sämtlichen Hohlräume (2) einseitig offen und in jeder Ebene einander paarweise gegenüberliegend angeordnet sind und sich zur Öffnung hin derart verengen, daß sie kegel- oder tropfenförmig ausgebildet sind, so daß bei einer Belastung in der Hauptbelastungsrichtung die in dieser Richtung gegenüberliegenden Innenwände jeweils eines dieser Hohlräume (2) in Kontakt kommen, und daß die Längsachsen (L) dieser aller Hohlräume (2) zueinander parallel verlaufen.

2. Federkörper (1) nach Anspruch 1, **dadurch gekennzeichnet**, daß die Hohlräume (2) einer Ebene zu den Hohlräumen (2) einer benachbarten Ebene um den halben Abstand (A) der Längsachsen (L) der Hohlräume (2) einer Ebene versetzt angeordnet sind.

3. Federkörper nach Anspruch 1 oder 2, **dadurch gekennzeichnet**, daß die jeweils mittleren Hohlräume (2) einer Ebene kürzer ausgeführt sind als die äußeren Hohlräume (2).

4. Federkörper nach Anspruch 3, **dadurch gekennzeichnet**, daß die innenliegenden Enden der Hohlräume (2) halbkugelförmig ausgebildet sind und die Mittelpunkte (M) der halbkugelförmigen Enden konzentrisch zur Mittelachse (3) des Federkörpers (1) liegen.

5. Federkörper nach einem der Ansprüche 1 bis 4, **dadurch gekennzeichnet**, daß er von einer zu den Längsachsen (L) der Hohlräume (2) rechtwinklig angeordneten Ausnehmung (4) durchsetzt ist.

6. Federkörper nach Anspruch 5, **dadurch gekennzeichnet**, daß die Ausnehmung (4) zylindrisch ist und nach innen vorspringende, über den Umfang verteilte, halbkugelförmige Abstützpunkte (5) aufweist.

## Claims

1. A resilient body (1) of an elastic material, whose main loading direction lies parallel to its central axis (3) and all of whose cavities (2) lying perpendicularly to the central axis (3) are elongate and arranged in several planes lying at right angles to the central axis (3), characterised in that all these cavities (2) are open on one side and arranged opposite each other in pairs in each plane and taper towards the opening in such a way that they are of conical or tear-shaped construction, such that, when they are loaded in the main loading direction, the internal walls, opposing each other in this direction, of each of these cavities come into contact, and in that the longitudinal axes (L) of all these cavities (2) extend parallel with each other.

2. A resilient body (1) according to claim 1, characterised in that the cavities (2) of one plane are staggered with respect to the cavities (2) of an adjacent plane by half the distance (A) between the longitudinal axes (L) of the cavities (2) of one plane.

3. A resilient body according to claim 1 or claim 2, characterised in that the respective central cavities (2) of one plane are shorter than the outer cavities (2).

4. A resilient body according to claim 3, characterised in that the inner ends of the cavities (2) are hemispherical in shape and the middle points (M) of the hemispherical ends are concentric with respect to the central axis (3) of the resilient body (1).

5. A resilient body according to any one of claims 1 to 4, characterised in that it has a hole (4) running through it which is arranged at right angles to the longitudinal axes (L) of the cavities (2).

6. A resilient body according to claim 5, characterised in that the hole (4) is cylindrical and comprises inwardly projecting, hemispherical support points (5) distributed over the circumference.

## Revendications

1. Bloc élastique (1) en un matériau élastique, dont la direction de sollicitation principale est parallèle à l'axe (3) dudit bloc élastique et dont toutes les cavités (2) perpendiculaires à l'axe (3) sont oblongues et comprises dans plusieurs plans perpendiculaires à l'axe (3), caractérisé en ce que toutes ces cavités (2) sont ouvertes à une extrémité, sont agencées dans chaque plan par paires de cavités opposées et vont en s'effilant en direction de l'ouverture de manière à affecter la forme d'un cône ou d'une goutte, de sorte qu'en cas de sollicitation dans la direction de sollicitation principale, les parois internes opposées, dans cette direction, de chacune de ces cavités (2) entrent en contact les unes avec les autres et en ce que les axes longitudinaux (L) de toutes ces cavités (2) sont parallèles entre eux.

2. Corps élastique (1) selon la revendication 1, caractérisé en ce que les cavités (2) d'un plan sont décalées par rapport aux cavités (2) d'un plan voisin d'une distance (A) égale à la moitié de la longueur des axes longitudinaux (L) des cavités (2) d'un plan.

3. Corps élastique selon la revendication 1 ou 2, caractérisé en ce que chaque cavité centrale (2) d'un plan est plus courte que les cavités externes (2).

4. Corps élastique selon la revendication 3, caractérisé en ce que les extrémités internes des cavités (2) sont de forme hémisphérique et en ce que les centres (M) des extrémités hémisphériques sont agencés concentriquement à l'axe (3) du corps élastique (1).

5. Corps élastique selon l'une quelconque des revendications 1 à 4, caractérisé en ce qu'il est traversé par un évidement (4) perpendiculaire aux axes longitudinaux (L) des cavités (2).

6. Corps élastique selon la revendication 5, caractérisé en ce que l'évidement (4) est de forme cylindrique et présente des points d'appui (5) hémisphériques, en saillie vers l'intérieur et répartis sur sa périphérie.
